# NEUE EUROPÄISCHE PATENTSCHRIFT

(11) **EP 1 873 442 B2**
(45) Veröffentlichungstag und Bekanntmachung des Hinweises auf die Entscheidung über den Einspruch: **14.12.2011**
(45) Hinweis auf die Patenterteilung: 11.03.2009
(21) Anmeldenummer: 06013298.2
(22) Anmeldetag: 28.06.2006
(51) Int. Cl.: F16P 3/14, G01V 8/20

(54) **Verfahren und Vorrichtung zur Sicherheitsüberwachung eines Durchgangs**
Method and device for the safety monitoring of a passage.
Méthode et dispositif pour effectuer la surveillance de la sécurité d'un passage

(43) Veröffentlichungstag der Anmeldung: 02.01.2008
(73) Patentinhaber: SICK AG, 79183 Waldkirch (DE)
(72) Erfinder: Grabinger, Jörg, 79312 Emmendingen (DE); Pirkl, Klaus, 64572 Büttelborn (DE)
(74) Vertreter: Ludewigt, Christoph

(56) Entgegenhaltungen:
- DE-A1- 4 305 559
- DE-A1- 10 233 258
- DE-A1- 10 329 881
- DE-B4- 10 039 142
- DE-C2- 4 422 497
- US-A- 5 243 183

## Beschreibung

Die Erfindung betrifft ein Verfahren zur Sicherheitsüberwachung eines Durchgangs gemäß dem Oberbegriff des Patentanspruchs 1 sowie eine Vorrichtung zur Durchführung dieses Verfahrens gemäß dem Oberbegriff des Patentanspruchs 8.

Diese bekannten Verfahren und Vorrichtungen dienen zur Absicherung von Durchgängen, durch welche bestimmte Objekte in einen Schutzbereich eintreten oder aus diesem austreten, während ein Eintreten oder Austreten von nicht zugelassenen Objekten, insbesondere von Personen verhindert werden soll. Anwendungen sind z.B. die Zugangssicherung von automatischen Fertigungsanlagen, die Absicherung von Einfahrtsöffnungen zu Fertigungszellen, die Absicherung von Abkantpressen und Palettieranlagen, die Transporttechnik, die Förder- und Lagertechnik, die Verpackungsindustrie, der Maschinenbau und die Automobilindustrie.

Es ist bekannt, solche Durchgänge durch ein Lichtgitter abzusichern, bei welchem übereinander angeordnete Sendeeinheiten Lichtstrahlen aussenden, die von entsprechend angeordneten Empfangseinheiten empfangen werden. Die Unterbrechung der Lichtstrahlen signalisiert den Durchtritt eines Objektes. Falls ein nicht zugelassenen Objekt das Lichtgitter durchtritt, wird eine Sicherheitsfunktion ausgelöst, z. B. ein Alarm ausgelöst, eine gefährdende Produktionsmaschine abgeschaltet oder dergleichen. Damit die zugelassenen Objekte durch den abgesicherten Durchgang hindurchtreten können, wird das sogenannte Muting-Verfahren angewendet, bei welchem ein zugelassenes Objekt erkannt wird und die Sicherheitsfunktion unterdrückt wird, wenn das Lichtgitter von einem als zugelassen identifizierten Objekt durchtreten wird.

Aus der DE 103 15 667 A1 ist es bekannt, vor dem Lichtgitter weitere Lichtschranken anzubringen, die beim Durchtritt eines Objektes die Muting-Funktion des Lichtgitters bewirken. Bei einem zugelassenen Objekt tritt dieses durch das Lichtgitter durch, solange die vorgeschaltete Lichtschranke durch dieses Objekt unterbrochen ist, so dass das zugelassene Objekt die Lichtschranke passieren kann, ohne die Sicherheitsfunktion auszulösen. Passiert z. B. ein Mensch die vorgeschaltete Lichtschranke, so gibt er diese wieder frei, bevor er das Lichtgitter passiert, so dass die Muting-Funktion rechtzeitig beendet ist, bevor der Mensch das Lichtgitter passiert, und die Sicherheitsfunktion wird ausgelöst. Die vor und hinter dem Lichtgitter angeordneten zusätzlichen Lichtschranken vergrößern die Abmessungen der Sicherheitsvorrichtung in Transportrichtung der Objekte. Die Anordnung der vor- und nachgeschalteten Lichtschranken hängt von den Dimensionen der zugelassenen Objekte ab, so dass eine Absicherung nur bei Objekten möglich ist, die sich ausreichend von nicht zugelassenen Objekten, insbesondere dem menschlichen Körper unterscheiden.

Aus der DE 103 29 881 A1 ist ein Verfahren und eine Vorrichtung der eingangs genannten Gattung bekannt, bei welchem durch die übereinander angeordneten Lichtstrahlen des Lichtgitters ein durch das Lichtgitter durchtretendes Objekt abgetastet wird. Ein dem Lichtgitter vorgeschalteter Positionssensor zeigt an, dass ein Objekt das Lichtgitter durchtritt. **I**n vorgegebenen Zeitabständen wird das Bitmuster der unterbrochenen und nicht unterbrochenen Lichtstrahlen des Lichtgitters aufgenommen und mit entsprechenden abgespeicherten Bitmustern des zugelassenen Objektes verglichen. Stimmen die Bitmuster überein, wird die Auslösung der Sicherheitsfunktion unterdrückt, ergeben sich Abweichungen von dem gespeicherten Bitmuster, wird die Sicherheitsfunktion ausgelöst. Das zeitlich getaktete Abtasten und Vergleichen mit den gespeicherten Bitmustern setzt voraus, dass das Objekt mit einer vorgegebenen Geschwindigkeit durch das Lichtgitter transportiert wird. Bei einem Lichtgitter mit einer größeren Anzahl von übereinander verlaufenden Lichtstrahlen, z. B. etwa 200 Lichtstrahlen, und einer größeren Durchlaufgeschwindigkeit der Objekte erfordert dieses Verfahren eine große Speicherkapazität für die abgelegten Bitmuster und einen hohen Aufwand für den schnellen Vergleich der aufgenommenen Bitmuster mit den hinterlegten Bitmustern.

Aus der DE 43 05 559 A1 ist eine Anordnung und ein Verfahren zur Konturerkennung von auf einem Förderband mit gleichförmiger Fördergeschwindigkeit an einer optischen Abtasteinrichtung vorbeibewegten Flaschen bekannt. Die Abtasteinrichtung weist dabei eine Gruppe von in unterschiedlicher Höhe über dem Förderband angeordneten, quer zur Förderrichtung ausgerichteten Lichtschranken auf.

Aus der DE 102 33 258 A1 ist ein Lichtgitter mit einer vorgegebenen Anzahl von parallelen Strahlachsen bekannt. Zur Konfiguration des Lichtgitters werden den Strahlachsen einzelne Bitworte zugewiesen, wobei durch Vorgabe der Bitwerte für die einzelnen Bits der Bitworte über die Steuereinheit die Funktionalität des Lichtgitters auf einfache Weise vorgebbar und bei Bedarf änderbar ist.

Der Erfindung liegt die Aufgabe zugrunde, ein Verfahren und eine Vorrichtung zur Absicherung eines Durchgangs zu schaffen, die ein hohe Zuverlässigkeit mit einem geringeren Aufwand gewährleisten.

Diese Aufgabe wird erfingdungsgemäß gelöst durch ein Verfahren mit den Merkmalen des Anspruchs 1 sowie durch eine Vorrichtung mit den Merkmalen des Anspruchs 8.

Vorteilhafte Ausführungen und Weiterbildungen der Erfindung sind in den jeweils rückbezogenen Unteransprüchen angegeben.

Erfindungsgemäß wird nicht das gesamte vertikale Bitmuster des Lichtgitters mit in der Regel einer großen Anzahl von Lichtstrahlen bei der Auswertung verwendet. Das zu überwachende zugelassene Objekt deckt eine Anzahl von Lichtstrahlen des Lichtgitters ab und lässt oberhalb und gegebenenfalls unterhalb der Objektkontur die Lichtstrahlen frei durchtreten. Erfindungsgemäß wird jeweils nur der oberste und/oder unterste durch das durchtretende Objekt abgedeckte Lichtstrahl des Objekt-Bitmusters durch die Auswertung verarbeitet. Diese Lichtstrahlen tasten die Kontur des durch das Lichtgitter laufenden Objektes ab und ermöglichen somit eine Formerkennung und Identifizierung des durchlaufenden Objektes. Diese durch das Lichtgitter und die Auswertung des Objekt-Bitmusters erfasste Konturform wird mit einer in der Auswerteeinheit hinterlegten Referenz-Konturform verglichen. Bei Übereinstimmung wird das Muting ausgelöst, d. h. die Auslösung der Sicherheitsfunktion wird unterdrückt.

Bei dieser Formerkennung werden jeweils die Änderungen der Form, d. h. ein Wechsel des jeweils abgedeckten obersten und/oder untersten Lichtstrahls erfasst und in der Auswerteeinheit mit einer entsprechenden Änderung des Referenz-Bitmusters verglichen. Dieser Vergleich der jeweils aufeinanderfolgenden Änderun gen der Konturform macht die Formerkennung von der Durchlaufgeschwindigkeit des abgetasteten Objektes unabhängig. Es wird nicht der von der Durchlaufgeschwindigkeit abhängige zeitliche Abstand der Änderungen der Konturform ausgewertet, sondern nur die Übereinstimmung der Änderungen in ihrer Größe, Richtung und zeitlichen Aufeinanderfolge.

Das erfindungsgemäß Verfahren kommt auf diese Weise mit einem Vergleich nur einiger weniger Bits des Objekt-Bitmusters und des Referenz-Bitmusters aus, so dass der Aufwand der Auswertung auch bei einem Lichtgitter mit einer großen Anzahl von Lichtstrahlen und somit einer hohen Auflösung gering bleibt und eine hohe Durchlaufgeschwindigkeit der zu erfassenden Objekte zulässt. Es sind keine zu dem Lichtgitter zusätzlichen Sensoren zur Erfassung und Abtastung der Objekte erforderlich, die den Aufwand und die räumlichen Abmessungen der Sicherheitsüberwachung vergrößern und die Zuverlässigkeit beeinträchtigen könnten. Außerdem ist die Überwachung von der Durchlaufgeschwindigkeit der zu überwachenden Objekte unabhängig, so dass die Überwachung einfacher wird, ohne dass hierdurch die Zuverlässigkeit reduziert wird.

Wenn im Rahmen der Erfindung und ihrer Beschreibung von einer Auswertung des jeweils obersten und/oder untersten durch ein das Lichtgitter passierendes Objekt abgedeckten Lichtstrahles die Rede ist, so kann dies in der Realisierung selbstverständlich auch in der Weise durchgeführt werden, dass der jeweils erste oberhalb und/oder unterhalb des Objektes nicht abgedeckte Lichtstrahl ausgewertet wird. Weiter werden in der Praxis, insbesondere wenn das Lichtgitter eine große Anzahl von Lichtstrahlen mit geringem vertikalem Abstand aufweist, nicht nur ein oberster und/oder unterster abgedeckter Lichtstrahl ausgewertet, sondern einige vertikal aufeinanderfolgenden Lichtstrahlen im Bereich der Konturform, um einen vertikalen Toleranzbereich in der Formerkennung zuzulassen, wodurch eine Störanfälligkeit der Sicherheitsüberwachung verringert wird.

Beim Eintritt eines Objektes in das Lichtgitter werden zunächst in der erfindungsgemäßen Weise der Anfang und die Konturform des eintretenden Objektes erfasst und mit dem in der Auswerteeinheit hinterlegten Referenz-Bitmuster verglichen.

Nach einer vorgegebenen Anzahl von übereinstimmenden Änderungen wird das Objekt als zugelassenes Objekt identifiziert und die Unterdrückung der Sicherheitsfunktion, d. h. das sogenannte Muting, ausgelöst. Dieser Zustand bleibt bestehen, solange die jeweils erfassten Änderungen der Kontur des Objektes mit den hinterlegten Referenzmustern übereinstimmen. Weichen die festgestellten Änderungen von den hinterlegten Änderungen ab, wird die Muting-Funktion beendet und die Sicherheitsfunktion wird ausgelöst. Hierbei ist selbstverständlich auch ein gewisser Toleranzbereich vorgesehen.

Sobald das durchlaufende Objekt das Lichtgitter vollständig passiert hat und sämtliche Lichtstrahlen des Lichtgitters freigegeben sind, wird das Muting beendet und die Sicherheitsüberwachung ist wieder aktiv.

In einer Ausführung der Erfindung wird ein Lichtstrahl (oder einige wenige Lichtstrahlen) des Lichtgitters als "Muting-Strahl" definiert. Als Muting-Strahl wird ein Lichtstrahl des Lichtgitters ausgewählt, der sich in einer Höhe befindet, in welcher das durchlaufende zugelassene Objekt keine Unterbrechungen aufweist, die während des Durchtritts den Lichtstrahl frei passieren lassen. Ein solcher Muting-Strahl kann die Betriebssicherheit zusätzlich erhöhen. Beim Eintreten eines zugelassenen Objektes in das Lichtgitter wird dieses erkannt, um das Muting auszulösen. Dabei wird auch der Muting-Strahl abgedeckt. Wird der Muting-Strahl wieder freigegeben, so lässt die Auswerteeinheit die Auslösung eines neuen Mutings erst dann wieder zu, wenn das gesamte Objekt durch das Lichtgitter durchgetreten ist und sämtliche Lichtstrahlen des Lichtgitters freigegeben worden sind.

Werden die Objekte mit einer automatischen Transporteinrichtung durch das Lichtgitter befördert, so kann als Muting-Strahl insbesondere auch ein Lichtstrahl des Lichtgitters ausgewählt werden, der sich in der Höhe einer die transportierten Objekte tragenden Transporteinrichtung befindet.

In einer weiteren Ausführung der Erfindung kann die Sicherheit der Überwachung zusätzlich noch durch folgende Maßnahme erhöht werden. Einer oder vorzugsweise einige vertikal beabstandete Strahlen des Lichtgitters werden als "Foto-Strahlen" ausgewählt. Diese Strahlen haben neben der vorgehend beschriebenen Funktion bei der Überwachung noch die zusätzliche Funktion, dass bei einem Abdecken und/oder Freigeben eines dieser Fotostrahlen durch das durchlaufende Objekt das gesamte Objekt-Bitmuster sämtlicher Lichtstrahlen des Lichtgitters aufgenommen und mit einem entsprechenden in der Auswerteeinheit gespeicherten Referenz-Bitmuster verglichen wird. Dadurch können auch Öffnungen des Objektes, die Lichtstrahlen des Lichtgitters durchtreten lassen, erfasst und zur Überwachung herangezogen werden, z. B. die Fensteröffnungen einer Fahrzeugkarosserie. In dieser Ausführung wird im Wesentlichen die vollständige Erfassung des durchlaufenden Objektes erreicht, wie dies bei herkömmlichen Sicherheitsüberwachungen der Fall ist, bei welchen jeweils das gesamte Bitmuster erfasst und verglichen wird. Der Vorteil gegenüber diesem bekannten Verfahren besteht darin, dass das gesamte Bitmuster nur an wenigen durch die Foto-Strahlen definierten Punkten aufgenommen und verglichen wird, so dass eine wesentlich geringere Speicherkapazität in der Auswerteeinheit erforderlich ist. Außerdem bleibt auch hier der Vorteil erhalten, dass die Überwachung von der Durchlaufgeschwindigkeit des Objektes unabhängig ist.

Die Referenz-Bitmuster für die Änderungen der Konturform des Objektes, gegebenenfalls für den Muting-Strahl und gegebenenfalls für die Foto-Strahlen und die diesen zugeordneten kompletten Bitmuster werden in einem Teach-in-Zyklus eingelesen und in der Auswerteeinheit abgespeichert. Die Vorrichtung ist dadurch in der Verwendung äußerst flexibel. Es können unterschiedliche Objekte, z. B. unterschiedliche Karosserieformen, überwacht werden, ohne dass hierzu ein Umbau oder eine Umrüstung der Vorrichtung erforderlich ist. Es müssen jeweils nur die unterschiedlichen Referenz-Bitmuster über einen jeweiligen Teach-in-Zyklus in der Auswerteeinheit abgelegt werden und können dann jeweils nach Bedarf aufgerufen werden.

Im Folgenden wird die Erfindung anhand eines schematischen Ausführungsbeispiels und der beigefügten Zeichnungen näher erläutert.

Es zeigen
- Fig. 1: schematisch eine Transporteinrichtung mit einem durch ein Lichtgitter abgesicherten Durchgang,
- Fig. 2: die Abtastung des durchtretenden Objektes durch das Lichtgitter,
- Fig. 3: die Analyse des Objekt-Bitmuster bei der Formerkennung des Objektes der Fig. 2,
- Fig. 4: die Formerkennung in einer Ausführung mit Foto-Strahlen und
- Fig. 5: die Auswertung der Objekt-Bitmuster der Figur 4.

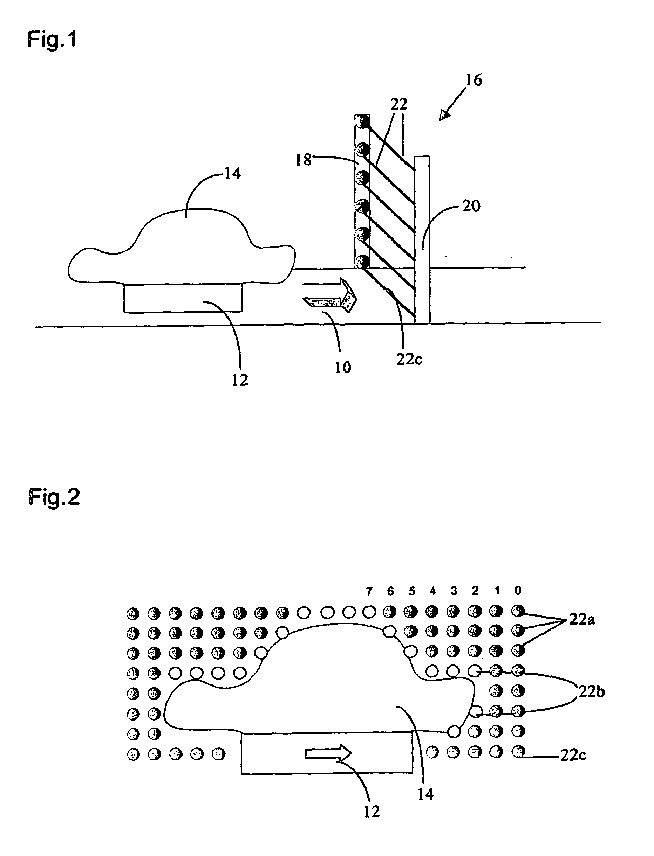

Das Verfahren und die Vorrichtung zur Sicherheitsüberwachung eines Gefahrenbereichs ist im Ausführungsbeispiel anhand des Durchgangs erläutert, durch welchen Fahrzeugkarosserien beispielsweise in eine Lackierzelle transportiert werden. Auf einem in Richtung des in Figur 1 eingezeichneten Pfeils laufenden Transportband 10 sind Transporteinrichtungen 12 angeordnet, die jeweils eine Karosserie 14 tragen. Das Transportband 10 läuft durch einen Durchgang, der durch ein Lichtgitter 16 abgesichert ist. Das Lichtgitter 16 besteht aus einer vertikalen Leiste von übereinander angeordneten Sendeeinheiten 18 und einer gegenüber auf der anderen Seite des Durchgangs angeordneten entsprechenden vertikalen Leiste von übereinander angeordneten Empfangseinheiten 20. Die Sendeeinheiten 18 senden parallel übereinander beabstandet horizontal verlaufende Lichtstrahlen 22 aus, die in den jeweils zugeordneten Empfangseinheiten 20 empfangen werden. In der Zeichnung weist das Lichtgitter 16 zur schematischen Erläuterung nur einige wenige Lichtstrahlen 22 auf. In der Praxis werden Lichtgitter 16 verwendet, die eine wesentlich größere Anzahl von Lichtstrahlen 22 mit einem entsprechend geringen vertikalen Abstand aufweisen, um ein Lichtgitter 16 mit hoher Auflösung zu erhalten. **I**n der Praxis werden Lichtgitter 16 verwendet, die je nach Höhe bis zu 200 Lichtstrahlen 22 aufweisen.

Die Sendeeinheiten 18 und die Empfangseinheiten 20 sind in nicht dargestellter und an sich bekannter Weise mit einer Auswerteeinheit verbunden, die das Aussenden und Empfangen der Lichtstrahlen steuert und überwacht und die Lichtsignale der Empfangseinheiten 20 verarbeitet.

In Figur 2 ist dargestellt, wie die Formkontur eines Objektes, im Ausführungsbeispiel der Karosserie 14 beim Durchtritt durch das Lichtgitter 16 erfasst wird. Die Lichtstrahlen 22 des Lichtgitters 16 sind dabei als vertikale Spalte dargestellt, wobei die nebeneinander gezeichneten und mit "0,1,2,3....." bezeichneten Spalten zeitlich aufeinanderfolgende Situationen der Lichtstrahlen 22 desselben Lichtgitters 16 darstellen, wenn dieses von der Karosserie 14 in der Pfeilrichtung durchlaufen wird. In den Figuren 2 bis 5 sind jeweils die Lichtstrahlen 22, die durch das durchlaufende Objekt 14 nicht abgedeckt sind, als offene Kreise gezeichnet und mit 22a bezeichnet. Die jeweils durch das Objekt 14 abgedeckten Lichtstrahlen 22, die nicht in die Empfangseinheiten 20 gelangen, sind dagegen als schwarze Kreise 22b dargestellt.

Das Lichtgitter 16 sperrt den Durchgang zu dem Gefahrenbereich vollständig ab. Ist die Sicherheitsüberwachung aktiv, so treffen alle von den Sendeeinheiten 18 ausgesandten Lichtstrahlen 22 als freie Lichtstrahlen 22a auf die zugehörigen Empfangseinheiten 20. Dies wird in der Auswerteeinheit überwacht. Die sich in dem Gefahrenbereich befindenden Maschinen und Anlagen werden für den Betrieb freigegeben.

Werden einer oder mehrere der Lichtstrahlen 22 abgedeckt, so wird dies in der Auswerteeinheit festgestellt und die Auswerteeinheit löst eine Sicherheitsfunktion aus, die z. B. darin bestehen kann, dass ein Alarmsignal abgegeben wird, das gefährliche Anlagen und Maschinen abgeschaltet werden oder dergleichen.

Damit diese Sicherheitsfunktion nur dann ausgelöst wird, wenn ein unerlaubtes Objekt, insbesondere z. B. ein Mensch den durch das Lichtgitter 16 abgesicherten Durchgang passiert, nicht jedoch, wenn ein zugelassenes Objekt, z. B. die Karosserie 14 den Durchgang passiert, ist ein Muting-Funktion vorgesehen. Diese Muting-Funktion unterdrückt die Auslösung der Sicherheitsfunktion, wenn ein das Lichtgitter 16 passierendes Objekt 14 als zugelassenes Objekt erkannt wird.

Tritt bei der erfindungsgemäßen Sicherheitsüberwachung das zugelassene Objekt, nämlich die Karosserie 14 in das Lichtgitter 16 ein, so deckt die Karosserie 14 jeweils einige Lichtstrahlen 22 ab, die zuvor als freie Lichtstrahlen 22a in die Empfangseinheiten 20 gelangen konnten. In Figur 2 sind jeweils der oberste und der unterste durch die Umfangskontur der Karosserie 14 abgedeckte Lichtstrahl 22b im Verlauf des Durchtritts der Karosserie 14 durch das Lichtgitter 16 gezeigt. Durch diese obersten und untersten abgedeckten Lichtstrahlen 22b wird somit die Außenkontur der Karosserie 14 in der Projektionsebene der Lichtstrahlen 22 abgetastet.

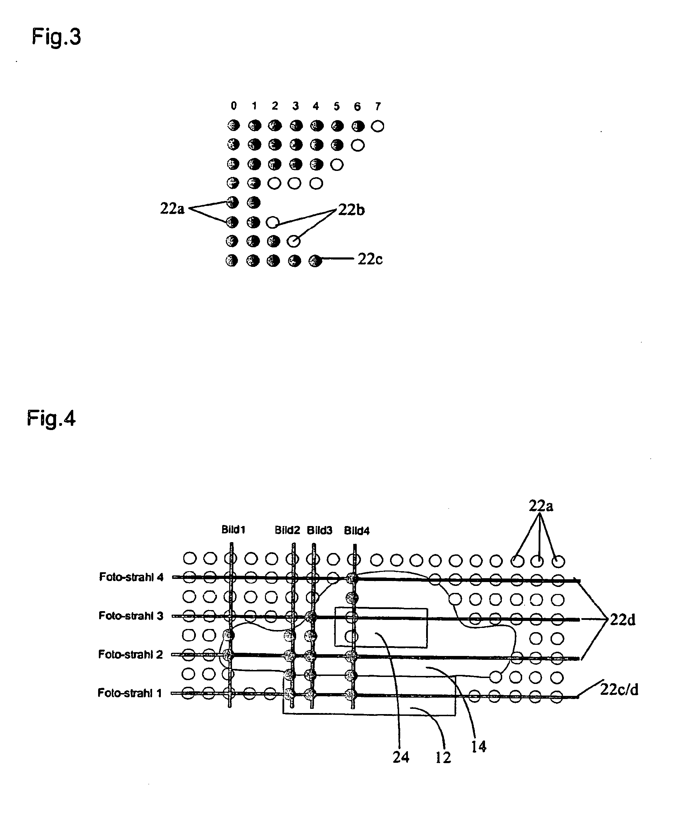

Figur 3 zeigt, wie diese Abtastung in der Auswerteeinheit verarbeitet wird. Das Objekt-Bitmuster der vertikal übereinander angeordneten Lichtstrahlen 22 des Lichtgitters 16 wird von der Auswerteeinheit aufgenommen. Die Auswerteeinheit erfasst dabei jeweils, wenn sich in diesem Objekt-Bitmuster (0,1,2,3,4...) eine Änderung ergibt, d. h. ein bisher freier Lichtstrahl 22a abgedeckt wird oder ein bisher abgedeckter Lichtstrahl 22b freigegeben wird. Die Auswerteeinheit stellt jeweils fest, welcher Lichtstrahl 22, d.h. welches Bit des Objekt-Bitmusters sich gegenüber dem vorhergehenden Objekt-Bitmuster ändert und vergleicht diese Änderung mit in der Auswerteeinheit abgespeicherten Änderungen eines Referenz-Bitmusters des zugelassenen Objektes 14. Stimmen diese Änderungen sowohl in der Art der Änderung als auch in ihrer zeitlichen Aufeinanderfolge überein, so wird das durchlaufende Objekt 14 als zugelassenes Objekt erkannt und das Muting wird ausgelöst. Treten Abweichungen auf, wird die Sicherheitsfunktion ausgelöst, wobei eine gegebenenfalls laufende Muting-Funktion beendet wird. Tritt ein Objekt in das Lichtgitter 16 ein, d. h. werden freie Lichtstrahlen 22a durch ein eintretendes Objekt 14 abgedeckt, so werden zunächst die Änderungen des Objekt-Bitmusters in der Auswerteeinheit mit den gespeicherten Referenz-Änderungen verglichen. Ergibt sich eine Übereinstimmung in einer vorgebbaren Anzahl von ersten Änderungen, so wird das eintretende Objekt als zugelassenes Objekt 14 akzeptiert und das Muting ausgelöst. Der Muting-Zustand bleibt solange aufrechterhalten, wie die folgenden Änderung des Objekt-Bitmusters, d.h. die vom Lichtgitter 16 abgetastete Außenkontur des Objektes 14 mit dem hinterlegten Referenz-Muster übereinstimmt. Hat das Objekt 14 das Lichtgitter vollständig passiert, so dass wieder sämtliche Lichtstrahlen 22 des Lichtgitters 16 freigegeben sind, wird das Muting beendet und die Sicherheitsüberwachung ist wieder aktiv.

In einer Ausführung kann einer der Lichtstrahlen 22 des Lichtgitters 16 als "Muting-Strahl" 22c definiert werden. Als Muting-Strahl 22c wird ein Strahl 22 des Lichtgitters 16 ausgewählt, der sich in einer Höhe des Durchgangs befindet, in welcher das zugelassene Objekt, z. B. die Karosserie 14 keine Öffnung aufweist, durch welche ein Lichtstrahl 22 des Lichtgitters 16 durchtreten könnte. Als Muting-Strahl 22c kann dabei auch ein Lichtstrahl 22 ausgewählt werden, der sich auf der Höhe der Transporteinrichtung 12 befindet, die die Karosserie 14 trägt, wie dies in der Zeichnung dargestellt ist.

Wird beim Eintritt des Objekts 14 in das Lichtgitter 16 die Konturform des Objekts 14 durch Vergleich mit dem abgelegten Referenz-Muster als richtig erkannt und das Muting ausgelöst, so wird auch der Muting-Strahl 22c abgedeckt. Wird dieser Muting-Strahl 22c nach Durchlauf des Objektes 14 bzw. der Transporteinrichtung 12 freigegeben, so wird eine Unterbrechung des Muting-Strahls 22c durch die Auswerteeinrichtung erst dann wieder akzeptiert, wenn das gesamte Lichtgitter 16 zuvor vollständig frei gewesen ist.

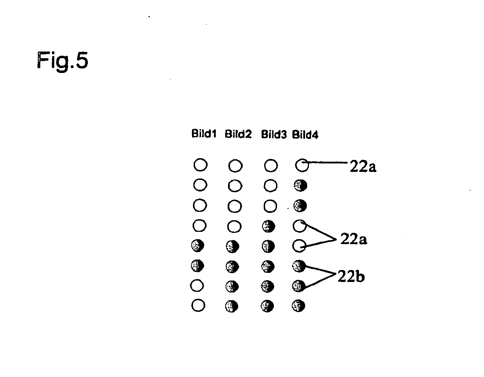

Eine weitere Erhöhung der Sicherheit kann durch die in den Figuren 4 und 5 erläuterte Auswertung erreicht werden.

In dieser Ausführung wird wenigstens ein Lichtstrahl 22 des Lichtgitters 16, vorzugsweise einige vertikal beabstandete Lichtstrahlen 22 als Foto-Strahlen 22d definiert, gegebenenfalls zusätzlich zu einem Muting-Strahl 22c. In dem schematischen Beispiel ist jeder zweite Lichtstrahl 22 als Foto-Strahl 22d ausgewählt. Je nach Anzahl der Lichtstrahlen 22 und Auflösung des Lichtgitters 16 können tatsächlich z.B. jeder fünfte oder jeder zehnte Lichtstrahl 22 als Foto-Strahl 22d gewählt werden. Dabei kann auch derselbe Lichtstrahl 22 sowohl die Funktion des Muting-Strahls 22c als auch die Funktion eines Foto-Strahls 22d erfüllen.

Die Foto-Strahlen 22d erfüllen zunächst dieselbe Funktion wie alle anderen Lichtstrahlen 22 für die Abtastung der Konturform des Objektes 14. Als Foto-Strahl 22d erfüllen diese Lichtstrahlen jedoch noch eine zusätzliche Funktion. Ändert sich das Objekt-Bitmuster in einem Foto-Strahl 22d, d. h. wird ein Foto-Strahl 22d abgedeckt oder freigegeben, so wird das hierzu gehörende komplette Objekt-Bitmuster, d.h. das Bitmuster sämtlicher Lichtstrahlen 22 in der Auswerteeinheit aufgenommen und mit dem kompletten gespeicherten Referenz-Bitmuster verglichen, welches die Änderung in diesem Foto-Strahl 22d aufweist.

Damit wird das gesamte Objekt-Bitmuster erfasst und mit dem gespeicherten Referenz-Bitmuster verglichen. Allerdings aufgrund der Auswahl der Foto-Strahlen 22d nur in einigen markanten Vertikalschnitten des Objektes, so dass die Speicher- und Rechenkapazität der Auswerteeinheit nicht zu groß werden. Durch das durch die Foto-Strahlen 22d ausgelöste punktuelle Erfassen und Vergleichen des gesamten Bitmusters können auch für die Lichtstrahlen 22 freie innere Ausschnitte in der Formkontur des Objektes erfasst und verglichen werden, z. B. ein Fensterausschnitt 24 in der Karosserie 14.

In Figur 4 ist gezeigt, wie durch das Abdecken der Foto-Strahlen 22d jeweils die Erfassung des gesamten Objekt-Bitmusters ausgelöst wird. In Figur 5 sind die jeweiligen Objekt-Bitmuster gezeigt, die in der Auswerteeinheit mit den entsprechenden gespeicherten Referenz-Bitmustern verglichen werden.

## Patentansprüche

1. Verfahren zur Überwachung eines Durchgangs, durch welchen Objekte transportiert werden, wobei der Durchgang durch wenigstens ein Lichtgitter (16) mit mehreren übereinander verlaufenden Lichtstrahlen (22) abgesichert wird, wobei die Signale des Lichtgitters (16) zeitlich aufeinander folgend als lineares Objekt-Bitmuster aufgenommen und mit entsprechenden gespeicherten Referenz-Bitmuster eines zugelassenen Objektes verglichen werden und wobei eine Sicherheitsfunktion ausgelöst wird, wenn das Lichtgitter (16) unterbrochen wird, und wobei die Auslösung dieser Sicherheitsfunktion unterdrückt wird, wenn die Objekt-Bitmuster mit den Referenz-Bitmustern übereinstimmen, **dadurch gekennzeichnet, dass** nur der jeweils oberste und/oder unterste der abgedeckten Lichtstrahlen (22b) des Objekt-Bitmusters und nicht das gesamte Objekt-Bitmuster ausgewertet wird, indem deren beim Durchlaufen des Objektes aufeinanderfolgenden Änderungen mit entsprechenden Änderungen der Referenz-Bitmuster auf Übereinstimmung verglichen werden.

2. Verfahren nach Anspruch 1, **dadurch gekennzeichnet, dass** die Unterdrückung der Sicherheitsfunktion gestartet wird, sobald eine vorgebbare Anzahl aufeinanderfolgender Änderungen der Objekt-Bitmuster erfasst und diese Änderungen als mit den Änderungen der entsprechenden Referenz-Bitmuster übereinstimmend erkannt werden.

3. Verfahren nach Anspruch 1 oder 2, **dadurch gekennzeichnet, dass** die Unterdrückung der Sicherheitsfunktion beendet wird, sobald das Objekt-Bitmuster keine abgedeckten Lichtstrahlen mehr aufweist.

4. Verfahren nach einem der vorhergehenden Ansprüche,**dadurch gekennzeichnet, dass** wenigstens ein Lichtstrahl (22) des Lichtgitters (16), der einem Höhenbereich entspricht, in welchem das zugelassene Objekt (14) keine lichtdurchlässigen Abschnitte aufweist, als Muting-Strahl (22c) ausgewählt wird und dass die Unterdrückung der Sicherheitsfunktion erst dann wieder aktiviert werden kann, wenn nach Freigabe des Muting-Strahles (22c) das gesamte Lichtgitter frei gewesen ist.

5. Verfahren nach Anspruch 4, **dadurch gekennzeichnet, dass** der Muting-Strahl (22c) in dem Höhenbereich einer das zugelassene Objekt (14) tragenden Transporteinrichtung (12) gewählt wird.

6. Verfahren nach einem der vorhergehenden Ansprüche, **dadurch gekennzeichnet, dass** ein oder mehrere Lichtstrahlen (22) des Lichtgitters (16) als Foto-Strahlen (22d) ausgewählt werden und dass bei Abdeckung und/oder Freigabe eines Foto-Strahles (22d) das gesamte Objekt-Bitmuster aufgenommen und mit dem entsprechenden gesamten Referenz-Bitmuster verglichen wird.

7. Verfahren nach einem der vorhergehenden Ansprüche, **dadurch gekennzeichnet, dass** die Referenz-Bitmuster und deren Änderungen in einem Teach-in-Zyklus eingelesen und gespeichert werden.

8. Vorrichtung zur Sicherheitsüberwachung eines Durchgangs, durch welchen Objekte (14) transportiert werden, mit wenigstens einem den Durchgang absichernden Lichtgitter (16) aus übereinander angeordneten, horizontal laufenden und vertikal von einander beabstandeten Lichtstrahlen (22), mit einer Auswerteeinheit, welche zeitlich aufeinanderfolgend die Signale des Lichtgitters (16) als lineares Objekt-Bitmuster aufnimmt und mit entsprechend gespeicherten Referenz-Bitmustern eines zugelassenen Objektes (14) vergleicht, wobei die Auswerteeinheit eine Sicherheitsfunktion auslöst, wenn das Lichtgitter (16) unterbrochen wird, und die Auslösung der Sicherheitsfunktion unterdrückt, wenn die Objekt-Bitmuster mit den Referenz-Bitmustern übereinstimmen, **dadurch gekennzeichnet, dass** die Auswerteeinheit nur den jeweils obersten und/oder untersten der abgedeckten Lichtstrahlen (22b) des Objekt-Bitmusters und nicht das gesamte Objekt-Bitmuster erfasst und dessen beim Durchtritt des Objektes (14) zeitlich aufeinanderfolgende Änderungen mit entsprechenden Änderungen der Referenz-Bitmuster auf Übereinstimmung vergleicht.

## Claims

1. A method for the monitoring of a passage through which objects are transported, wherein the passage is secured by at least one light grid (16) having a plurality of light beams (22) extending above one another, wherein the signals of the light grid (16) are recorded sequentially in time as a linear object bit pattern and are compared with corresponding stored reference bit patterns of an authorised object, and wherein a safety function is triggered when the light grid (16) is interrupted, and wherein the triggering of this safety function is suppressed if the object bit patterns agree with the reference bit patterns, **characterised in that** only the respective topmost and/or bottommost of the masked light beams (22b) of the object bit pattern and not the entire object bit pattern are evaluated **in that** their sequential changes on the passage of the object are compared for agreement with corresponding changes of the reference bit pattern.

2. A method in accordance with claim 1, **characterised in that** the suppression of the safety function is started as soon as a presettable number of sequential changes of the object bit patterns are detected and these changes are recognised as agreeing with the changes of corresponding reference bit patterns.

3. A method in accordance with claim 1 or claim 2, **characterised in that** the suppression of the safety function is ended as soon as the object bit pattern no longer has any masked light beams.

4. A method in accordance with any one of the preceding claims, **characterised in that** at least one light beam (22) of the light grid (16) corresponding to a vertical region in which the authorised object (14) does not have any light permeable sections is selected as a muting beam (22c); and **in that** the suppression of the safety function can only be activated again when the total light grid was free after release of the muting beam (22c).

5. A method in accordance with claim 4, **characterised in that** the muting beam (22c) is selected in the vertical area of a transport device (12) bearing the authorised object (14).

6. A method in accordance with any one of the preceding claims, **characterised in that** one or more light beams (22) of the light grid (16) are selected as photo-beams (22d); and **in that** the total object bit pattern is recorded and compared with the corresponding total reference bit pattern on the masking and/ or release of a photo-beam (22d).

7. A method in accordance with any one of the preceding claims **characterised in that** the reference bit patterns and their changes are read in and stored in a teach-in cycle.

8. An apparatus for the safety monitoring of a passage through which objects (14) are transported having at least one light grid (16) which secures the passage and is made of light beams which are arranged above one another, extend horizontally and are spaced apart from one another vertically; having an evaluation unit which records the signals of the light grid (16) sequentially in time as a linear object bit pattern; and having correspondingly stored reference bit patterns of an authorised object (14), wherein the evaluation unit triggers a safety function when the light grid (16) is interrupted and suppresses the triggering of the safety function when the object bit patterns agree with the reference bit patterns, **characterised in that** the evaluation unit detects the respective topmost and/or bottommost of the masked light beams (22b) of the object bit pattern and not the entire object bit pattern and compares its time sequential changes when the object passes through for correspondence with corresponding changes in the reference bit patterns.

## Revendications

1. Procédé de surveillance d'un passage au travers duquel sont transportés des objets, dans lequel le passage est protégé par au moins une barrière lumineuse (16) avec plusieurs faisceaux lumineux (22) disposés les uns au-dessus des autres, dans lequel les signaux de la barrière lumineuse (16) se succédant dans le temps sont capturés sous la forme d'un motif linéaire de bits de l'objet et sont comparés, avec des motifs de bits de référence correspondants, à un objet autorisé, qui sont sauvegardés, dans lequel une fonction de sécurité est déclenchée lorsque la barrière lumineuse (16) est interrompue et dans lequel le déclenchement de cette fonction de sécurité est inhibé lorsque les motifs de bits de l'objet correspondent aux motifs de bits de référence, **caractérisé en ce que** l'on n'analyse que le faisceau lumineux le plus élevé et/ou le plus bas parmi les faisceaux lumineux masqués (22b) du motif de bits de l'objet et ne pas l'entier motif de bits de l'objet, les variations successives lors du passage de l'objet étant comparées avec des variations correspondantes des motifs de bits de référence pour détecter leur coïncidence.

2. Procédé selon la revendication 1, **caractérisé en ce que** l'inhibition de la fonction de sécurité est lancée dès qu'un nombre prédéterminable de variations successives des motifs de bits de l'objet a été recueilli et qu'il a été détecté que ces variations étaient reconnues comme coïncidant avec les variations des motifs de bits de référence correspondants.

3. Procédé selon la revendication 1 ou 2, **caractérisé en ce que** l'inhibition de la fonction de sécurité cesse dès que le motif de bits de l'objet ne présente plus de faisceaux lumineux masqués.

4. Procédé selon l'une des revendications précédentes, **caractérisé en ce qu'**au moins un faisceau lumineux (22) de la barrière lumineuse (16), correspondant à un domaine de hauteurs où l'objet autorisé (14) ne possède pas de sections transparentes, est sélectionné comme faisceau de niveau de déclenchement (22c) et **en ce que** l'inhibition de la fonction de sécurité ne peut être réactivée que lorsque l'ensemble de la barrière lumineuse est dégagé, après libération du faisceau de niveau de déclenchement (22c).

5. Procédé selon la revendication 4, **caractérisé en ce que** le faisceau de niveau de déclenchement (22c) est sélectionné dans le domaine de hauteurs d'un dispositif de transport (12) qui porte l'objet autorisé (14).

6. Procédé selon l'une des revendications précédentes, **caractérisé en ce qu'**un ou plusieurs faisceaux lumineux (22) de la barrière lumineuse (16) sont sélectionnés comme faisceaux photoélectriques (22d) et **en ce que** le motif de bits intégral de l'objet est recueilli lors de l'interception et/ou de la libération d'un faisceau photoélectrique (22d), puis comparé avec le motif de bits intégral de référence.

7. Procédé selon l'une des revendications précédentes, **caractérisé en ce que** les motifs de bits de référence et leurs variations sont mémorisés et sauvegardés au cours d'un cycle d'apprentissage.

8. Dispositif de surveillance de la sécurité d'un passage au travers duquel sont transportés des objets (14), avec au moins une barrière lumineuse (16) protégeant le passage et composée de plusieurs faisceaux lumineux (22) disposés les uns au-dessus des autres, orientés horizontalement et écartés les uns des autres verticalement, avec une unité d'analyse qui capte les signaux de la barrière lumineuse (16) se succédant dans le temps sous la forme d'un motif linéaire de bits de l'objet et qui les compare avec des motifs de bits de référence sauvegardés de manière correspondante, correspondants à un objet autorisé (14), dans lequel l'unité d'analyse déclenche une fonction de sécurité lorsque la barrière lumineuse (16) est interrompue et inhibe le déclenchement de cette fonction de sécurité lorsque les motifs de bits de l'objet correspondent aux motifs de bits de référence, **caractérisé en ce que** l'unité d'évaluation ne détecte que le faisceau lumineux le plus élevé et/ou le plus bas parmi les faisceaux masqués (22b) du motif de bits de l'objet et ne pas l'entier motif de bits de l'objet et compare les variations se succédant dans le temps lors du passage de l'objet (14) avec des variations correspondantes des motifs de bits de référence pour détecter leur coïncidence.
